(19) 

Europäisches
Patentamt
European
Patent Office
Office européen
des brevets

(11) **EP 3 792 788 A1**

(12) **EUROPEAN PATENT APPLICATION**

(43) Date of publication:
**17.03.2021 Bulletin 2021/11**

(21) Application number: **20194191.1**

(22) Date of filing: **02.09.2020**

(51) Int Cl.:
**G06F 17/11** *(2006.01)*          **G06N 5/00** *(2006.01)*
**G06Q 10/04** *(2012.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.09.2019   JP 2019166243**

(71) Applicant: **FUJITSU LIMITED**
**Kanagawa 211-8588 (JP)**

(72) Inventors:
• **KAKUKO, Norihiro**
**Kawasaki-shi, Kanagawa 211-8588 (JP)**
• **MIYAZAWA, Toshiyuki**
**Kawasaki-shi, Kanagawa 211-8588 (JP)**

(74) Representative: **Haseltine Lake Kempner LLP**
**Cheapside House**
**138 Cheapside**
**London**
**EC2V 6BJ (GB)**

(54) **OPTIMIZATION APPARATUS, OPTIMIZATION PROGRAM, AND OPTIMIZATION METHOD**

(57)    An optimization apparatus includes a search unit configured to perform a search for solutions by using a first method by which a value of an objective function including constraints is probabilistically improved, and a generation unit configured to generate a first state that is at more than a predetermined distance from previous solutions obtained by the search unit, and to obtain a local solution by use of a second method by which state transitions starting from the first state are performed such as to satisfy the constraints and to improve the value of the objective function with a higher probability than by the first method, followed by outputting the local solution as an initial state, wherein a process of the generation unit outputting the initial state and a process of the search unit performing the search for solutions based on the first method from the initial state are iteratively performed.

FIG.1

EP 3 792 788 A1

## Description

FIELD

The disclosures herein relate to an optimization apparatus, an optimization program, and ab optimization method

BACKGROUND

An arithmetic apparatus such as a computer performs information processing to produce meaningful outputs through various data operations, thereby enabling prediction, determination, control, and the like in the various fields of modern society. Optimization processing is a branch of information processing. An optimization problem is the problem of finding a point (i.e., solution) belonging to search space that minimizes (or maximizes) the value of an objective function defined in the search space. The optimization problem may be broadly classified into a linear programming problem and a discrete optimization problem. In the latter case, an increase in the number of dimensions of search space results in an explosive increase in the number of combinations of variables. In such a case, the use of exhaustive search, which calculates all possible combinations, requires lengthy computation time that is practically infeasible.

A large-scale multivariate discrete optimization problem may be solved, not by finding a precise optimal solution, but by finding good approximate solutions in a realistic computational time based on an approximate solution method or a heuristic method. General-purpose approximation algorithms (meta-heuristic algorithms) that are based on heuristic methods and applicable to a variety of problems include a random-walk search algorithm, a simulated annealing algorithm, a genetic algorithm, a stochastic evolutionary algorithm, and the like. Examples of a mechanism for performing simulated annealing include an Ising machine (i.e., Boltzmann machine) using an Ising energy function. In an Ising machine, the problem to be solved is translated into an Ising model, which represents the behavior of spins of a magnetic material, and, then, a solution to the problem is calculated.

The approximation algorithms described above are designed such that a probabilistic element is introduced into state transitions that are performed from an initial state, i.e., a start point, to search for solutions attaining successively smaller values of an objective function, thereby allowing the state to converge on a near-optimal solution without being stuck in an unfavorable local minimum. Carefully designed control of the probabilistic element and use of a sufficiently long computational time allow the state to converge on an optimal solution or a solution that is sufficiently close to the optimal solution. However, a solution that is sufficiently close to the optimal solution is not always readily obtained within a practically feasible computational time. It is also difficult to design the control of a probabilistic element properly for each optimization problem.

In order to reduce the time required to search for solutions, the initial state may be set at random, and search for solutions may be repeated multiple times from different initial states, for example. Even in the case in which search for solutions starting from a given initial state gets stuck at a local minimum where the value of an objective function is not sufficiently small, this search for solutions may be terminated at proper timing, followed by starting a new search for solutions from a different initial state. This arrangement allows escape from a local solution, and reduces the time required to obtain an optimal solution without wasting time in a search that starts from such an initial state as to end up getting stuck at an unfavorable local solution or to need a lengthy time before reaching an optimal solution.

Even when searches for solutions are iteratively performed from different initial states as described above, a satisfactory solution may not be obtained without increasing the number of occurrences of escapes from local solutions, i.e., without increasing the number of times searches for solutions are performed from new initial states, when the difficulty of the problem is high due to a large number of local solutions as in the case in which constraint conditions are imposed. Further, as more and more escapes from local solutions are made, the probability increases that an initial state generated at random is close to a local solution already found by a previous search. In such a case, a needless search may be performed that converges on this local solution the second time.

Accordingly, it may be desired to provide a mechanism by which a proper initial state is set when a search for solutions is repeated from a different initial state.

[Patent Document 1] Japanese Unexamined Patent Application Publication No. 2014-178717
[Patent Document 2] Japanese Laid-open Patent Publication No. 2009-48353

[Summary of the Invention]

[Problem to be Solved by the Invention]

SUMMARY

According to an aspect of the embodiment, an optimization apparatus includes a search unit configured to perform a search for solutions by using a first method by which a value of an objective function including constraints as restraint conditions is probabilistically improved, and an initial state generation unit configured to generate a first state that is at more than a predetermined distance from one or more previous solutions obtained by the search unit, and to obtain a local solution by use of a second method by which state transitions starting from the first state are performed such as to satisfy the constraints and to improve the value of the objective function with a higher probability than by the first method, followed by outputting the local solution as an initial state, wherein a process of the initial state generation unit outputting the initial state and a process of the search unit performing the search for solutions based on the first method from the initial state are iteratively performed.

BRIEF DESCRIPTION OF DRAWINGS

Fig. 1 is a drawing illustrating an example of the functional configuration of an optimization apparatus;
Fig. 2 is a drawing illustrating an example of the optimization method performed by the optimization apparatus;
Fig. 3 is a drawing illustrating an example of the hardware configuration of a computer implementing the optimization apparatus;
Fig. 4 is a flowchart illustrating the procedure of the optimization method according to a first embodiment;
Fig. 5 is a flowchart illustrating an example of an algorithm based on which the initial state generation unit obtains a local solution;
Fig. 6 is a drawing illustrating an example of constraints;
Fig. 7 is a drawing illustrating another example of constraints;
Fig. 8 is a drawing illustrating another example of constraints;
Fig. 9 is a flowchart illustrating the procedure of the optimization method according to a second embodiment;
Fig. 10 is a flowchart illustrating the procedure of the optimization method according to a third embodiment;
Fig. 11 is a flowchart illustrating the procedure of the optimization method according to a fourth embodiment;
Figs. 12A through 12C are drawings illustrating differences in state transitions depending on the differences in temperature;
Fig. 13 is a flowchart illustrating the procedure of the optimization method according to a fifth embodiment;
Fig. 14 is a flowchart illustrating the procedure of the optimization method according to a sixth embodiment; and
Fig. 15 is a flowchart illustrating the procedure of the optimization method according to a seventh embodiment.

DESCRIPTION OF EMBODIMENTS

In the following, embodiments of the invention will be described with reference to the accompanying drawings.

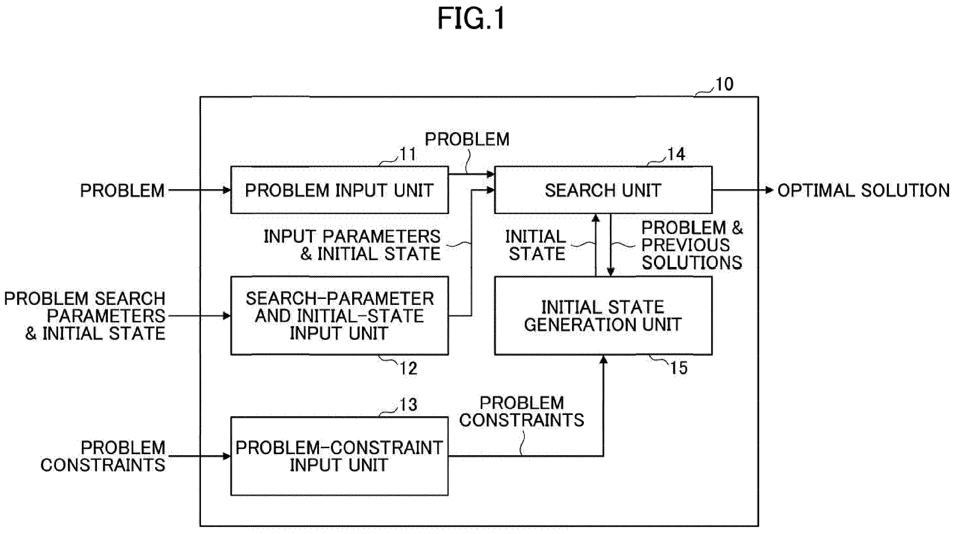

Fig. 1 is a drawing illustrating an example of the functional configuration of an optimization apparatus; An optimization apparatus 10 illustrated in Fig. 1 includes a problem input unit 11, a search-parameter and initial-state input unit 12, a problem-constraint input unit 13, a search unit 14, and an initial state generation unit 15. In Fig. 1, boundaries between functional blocks illustrated as boxes basically indicate functional boundaries, and may not correspond to separation in terms of physical positions, separation in terms of electrical signals, separation in terms of control logic, etc. The optimization apparatus may have a hardware configuration implemented by combining electronic circuit blocks having the functions of respective functional blocks, or may have a software configuration in which the functions of respective functional blocks are implemented by software executed by a general-purpose processor that is an electronic circuit. In the case of hardware implementation, each functional block may be a hardware module that is physically separated from other blocks to some extent, or may indicate a function in a hardware module in which this and other blocks are physically combined together. In the case of software implementation, each functional block may be a software module that is logically separated from other blocks to some extent, or may indicate a function in a software module in which this and other blocks are logically combined together.

The optimization apparatus 10 performs a general-purpose approximation algorithm such as a random-walk search algorithm, a simulated annealing algorithm, a genetic algorithm, a stochastic evolutionary algorithm, or the like. These approximation algorithms are designed such that a probabilistic element is introduced into state transitions that are performed from an initial state, i.e., a start point, to search for solutions attaining successively improved values of an objective function, thereby allowing the state to converge on as satisfactory a solution as possible without being stuck in an unfavorable local minimum. In the case of a genetic algorithm, for example, the selection of pairs, crossover, selection, mutation, and the like are controlled in a probabilistic manner during the process in which the fitness of the population serving as an objective function value increases in successive generations, thereby avoiding getting stuck at an unfavorable local solution. In the case of a simulated annealing algorithm, for example, state transitions are controlled in a probabilistic manner so as to allow a given state transition to occur with a certain probability even when the value of an objective function worsens as a result of such a state transition, thereby avoiding getting stuck at an unfavorable local solution.

An optimization problem to be solved by the optimization apparatus 10 is generally such that some constraints exist with respect to solutions. The constraints that solutions are supposed to satisfy may be conditions introduced in formulating the problem. In the case of a traveling salesman problem, for example, the objective is to obtain a solution for which the value of an objective function representing the distance of the entire route is as small as possible, and constraints which need to be satisfied by solutions may be set as conditions that no more than one city is visited at a given moment and that each city is visited exactly once. These conditions are formulated as constraints that, when visiting times and cities are associated with rows and columns in a two-dimensional matrix, respectively, only one entry is 1 in each row and in each column. A constraint term whose value is zero when the noted constraints are satisfied, and whose value increases in proportion to the degree to which the constraints are not satisfied, may be added to an objective function that represents the distance of the entire route, thereby creating a new objective function. The optimization problem may then be formulated as a task of minimizing the new objective function.

The problem input unit 11 receives an optimization problem formulated as described above from an external source. For example, a user using the optimization apparatus 10 may input an indication of a formula type representing the optimization problem (e.g., an indication of an Ising type) and the values of parameters in the formula.

The search-parameter and initial-state input unit 12 receives an initial state and parameters for search for solutions with respect to the optimization problem. In the case of simulated annealing, for example, a user using the optimization apparatus 10 may enter the initial value of thermal noise (i.e., temperature), the rate of thermal noise (i.e., temperature) decrease, and an initial state (e.g., a state in which all bits are zero), and the like.

The problem-constraint input unit 13 receives conditions indicative of the constrains imposed on the solutions of an optimization problem from an external source. In the case of a traveling salesman problem, for example, a user using the optimization apparatus 10 enters an expression or the like representing the constraints.

In Fig. 1, the search unit 14 performs search for solutions by using a first method by which the value of an objective function including the constraints as restraint conditions is probabilistically improved. This first method used in the search for solutions is a general-purpose approximation algorithm such as a random-walk search algorithm, a simulated annealing algorithm, a genetic algorithm, a stochastic evolutionary algorithm, or the like as previously described. The search unit 14 repeatedly performs a search for solutions based on the first method from a successively different initial state. For example, a search for solutions may be iteratively performed T times, and is stopped when T solutions are obtained. The optimization apparatus 10 may then output, as an optimal solution, one of the T solutions which has the most favorable objective function value.

Use of repeated searches for solutions allows escape from a local solution, and reduces the time required to obtain an optimal solution without wasting time in a search that starts from such an initial state as to end up getting stuck at an unfavorable local solution or to need a lengthy time before reaching an optimal solution. In this arrangement, it is preferable to generate a proper initial state so as not to perform a meaningless search that converges on a solution already obtained in the past by the search unit 14.

The initial state generation unit 15 receives an optimization problem (i.e., the objective function formula that defines the problem) and solutions obtained in previous searches from the search unit 14, and generates an appropriate initial state based on the received information. Specifically, the initial state generation unit 15 randomly generates a first state at which the distance (e.g., the Hamming distance, the Manhattan distance, or the Euclidean distance) from any solution previously obtained by the search unit 14 is greater than a predetermined distance. In doing so, all the solutions obtained in the past may be referred to, or a predetermined number of most recent solutions among the solutions obtained in the past may be referred to. The initial state generation unit 15 further obtains a local solution by use of a second method by which state transitions starting from the first state are performed such as to satisfy the constraints with certainty and to improve the value of an objective function with more certainty than by the first method, followed by outputting the obtained local solution as an initial state.

In randomly generating the first state as described above, the state generation process does not have to be completely random, but may be pseudo-random. A pseudo-random process may be the process utilizing a pseudo-random number generation function embedded in a computer. Alternatively, a process utilizing a deterministic algorithm to generate a state that appears as if generated at random is implemented, and is used to generate the first state.

The initial state output by the initial state generation unit 15 is supplied to the search unit 14. The initial state generation unit 15 and the search unit 14 are configured such that the process of the initial state generation unit 15 outputting an initial state and the process of the search unit 14 performing search for solutions based on the first method from the initial state are iteratively performed. As was previously described, the initial state used in each search for solutions corresponds to a local solution obtained by improving the value of an objective function from the first state, which is at more than a predetermined distance from the previously obtained solutions. Accordingly, use of a sufficiently large predetermined distance makes it possible to avoid, with high probability, the situation in which a search for solutions based on the first method, starting from the initial state, ends up converging on one of the previously obtained solutions.

Further, the second method obtains a local solution by performing state transitions starting from the first state such as to satisfy the constraints with certainty and to improve the value of an objective function with more certainty than by the first method, followed by providing the obtained local solution as an initial state. The speed of search for solutions as a whole can thus be increased. Namely, improving the value of an objective function with more certainty enables the initial local solution to be promptly obtained. Further, performing search in such a manner as to satisfy the constraints with certainty enables a next-stage search for solution to start from a favorable initial state that exits within the domain of feasible solutions (i.e., solutions satisfying the restraint conditions).

The second method executed by the initial state generation unit 15 may perform state transitions such that the constraints are satisfied with certainty and such that the value of an objective function monotonically increases. Namely, the concept of greedy method may be used as a basis for performing state transitions in a deterministic manner (i.e., without a probabilistic element) in the direction toward deterministic improvements in the value of an objective function. When a local solution is obtained at which the value of an objective function cannot be further improved, such a local solution may be supplied to the search unit 14 as an initial state. This ensures that the time required to obtain the initial local solution by improving the value of an objective function with certainty be further reduced.

When the distance between the local solution generated by the initial state generation unit 15 and any solution previously obtained by the search unit 14 is less than a predetermined threshold, the initial state generation unit 15 may repeat a process of randomly generating a first state and obtaining a local solution based on the second method to obtain a new local solution. Namely, when the distance between the local solution and any solution obtained in the past is relatively small, search for solutions based on the second method starting from the initial state corresponding to this local solution may converge on the same solution obtained in the past. In such a case, thus, a new local solution may be recalculated. In this manner, an initial step in the process of improving the value of an objective function is expeditiously performed to determine the position of an initial local solution at an early point in time. In the case in which the local solution and any solutions obtained in the past are relatively close, a new initial state is recalculated to avoid needless search for solutions with more certainty.

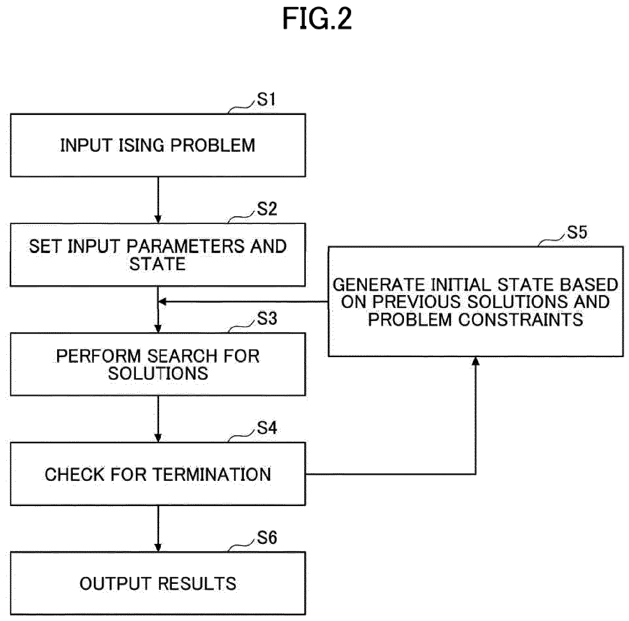

Fig. 2 is a drawing illustrating an example of the optimization method performed by the optimization apparatus. It may be noted that, in Fig. 2 and the subsequent flowcharts, an order in which the steps illustrated in the flowchart are performed is only an example. The scope of the disclosed technology is not limited to the disclosed order. For example, a description may explain that an A step is performed before a B step is performed. Despite such a description, it may be physically and logically possible to perform the B step before the A step while it is possible to perform the A step before the B step. In such a case, all the consequences that affect the outcomes of the flowchart may be the same regardless of which step is performed first. It then follows that, for the purposes of the disclosed technology, it is apparent that the B step can be performed before the A step is performed. Despite the explanation that the A step is performed before the B step, such a description is not intended to place the obvious case as described above outside the scope of the disclosed technology. Such an obvious case inevitably falls within the scope of the technology intended by this disclosure.

In the following, an optimization method and an embodiment thereof will be described with reference to a specific example in which search for solutions is performed by simulated annealing with respect to an Ising-type optimization problem. In this specific example, the objective function may be an Ising energy E(S) as expressed in the following formula.

$$E(S) = -\Sigma W_{ij}x_ix_j - \Sigma b_ix_i \quad (1)$$

S is a state having L spins (L: positive integer) as follows.

$$S = (x_1, \ x_2, \ \ldots, \ x_L) \quad (2)$$

Each spin assumes a value of -1 or +1 or a value of 0 or +1. $W_{ij}$ is a weighting factor for the coupling between spins, and may be such that Wij<i=j>=0. Further, $b_j$ is a bias. On the right-hand side of formula (1), the first $\Sigma$ term represents the sum with respect to all the combinations between i and j over the entire range from 1 to L. The second $\Sigma$ term represents the sum with respect to i over the entire range from 1 to L.

Formula (1) may already contain terms representing constraints. If the constraints are included, $W_{ij<i=j>}$ may not be zero. Search for solutions is equivalent to finding a state in which the above-noted energy is as low as possible.

In step S1 of Fig 2, an Ising problem is input. Specifically, the problem input unit 11 receives information specifying an Ising problem from an external source. This information includes information indicating that the optimization problem is in the form of formula (1) noted above, the number L of spins in the state S, the values of weighting factors $W_{ij}$, and the value of the bias bi.

In step S2, input parameters and states are set. Specifically, the search-parameter and initial-state input unit 12 receives information indicative of an initial state and information indicative of parameters for search for solutions. This information includes the initial value of thermal noise (i.e., temperature), the rate of thermal noise (i.e., temperature) decrease, the initial state (e.g., a state in which all bits representing the spins are zero), and a search count limit T, etc.

In step S55, search for solutions is performed. Specifically, the search unit 14 controls each state transition from a current state to a next state situated in the vicinity thereof based on a change in the value of energy E(S) resulting from the state transition, thereby finding a state S in which the value of energy E(S) is as low as possible.

More specifically, the search unit 14 calculates an energy value E of the current state S, and calculates an energy value E' of the next state S' obtained by making a slight change (e.g., 1 bit inversion) from the current state S, followed by calculating a difference $\Delta E$ (= E'-E) between these two states. In the case in which the Boltzmann distribution is used to represent the probability distribution of S and the Metropolis method is used, for example, probability P with which a transition to the next state S' occurs may be defined by the following formula.

$$P=\min[1, \exp(-\beta\Delta E)] \quad (3)$$

Here, $\beta$ is thermodynamic beta (i.e., the reciprocal of absolute temperature). The function min[1, x] assumes a value of 1 or a value of x, whichever is smaller. According to the above formula, a transition to the next state occurs with probability "1" in the case of $\Delta E \leqq 0$, and a transition to the next state occurs with probability $\exp(-\beta\Delta E)$ in the case of $0 < \Delta E$.

Lowering temperature at a sufficiently slow rate, while performing state transitions, allows the state to be converged, theoretically, on an optimal solution having the smallest energy value. The Metropolis method is a non-limiting example, and other transition control algorithms such as Gibbs sampling may alternatively be used. The search unit 14 may determine whether or not to make a state transition to the next state in accordance with probability P.

The search unit 14 brings the search for solutions to an end when determination criteria are satisfied. The determination criteria may require that a predetermined number of calculations for state transitions have been performed, or that changes in the energy value have been less than or equal to a predetermined threshold. One new solution is obtained each time the search unit 14 performs a search for solutions and brings the search to an end.

In step S4, a check for termination is made. Specifically, the search unit 14 checks whether searches for solutions have been performed a number of times equal to the specified search count limit T, resulting in the obtainment of T solutions. If T solutions have not yet been obtained, the procedure proceeds to step S5.

In step S5, an initial state is generated based on previous solutions and the constraints regarding the problem. Specifically, the initial state generation unit 15 randomly generates a first state that is at more than a predetermined distance from any solution previously obtained by the search unit 14. The initial state generation unit 15 further obtains a local solution by use of a second method by which state transitions starting from the first state are performed such as to satisfy the constraints with certainty and to reduce the energy value with more certainty than by the first method, followed by outputting the obtained local solution as an initial state.

When performing a state transition by use of the second method, the initial state generation unit 15 may invert one or more bits of the state S to find next state candidates that satisfy the constraints, and may select from these candidates a next state S' that causes the energy to be decreased. As a general principle, a state transition may be performed such that the energy decreases in a deterministic manner. It may be noted, however, that some probabilistic element can be introduced in the process performed before the determination of a local solution. For example, when the energy does not decrease for any of the next state candidates, a transition to one of the candidates may be performed with certain probability. Alternatively, once in a given number of times a state transition is performed, a transition to a state that causes the energy to be increased may be allowed with certain probability.

Upon obtaining a local state to be used as an initial state in step S5, the procedure returns to step S3, and the processes in step S3 and the subsequent steps will be performed again. In this case, a search for solutions performed in step S3 starts from the initial state obtained in step S5 by the initial state generation unit 15.

After the completion of the search for solutions, a check for termination is made in step S4. If this check indicates that T solutions have already been obtained, the procedure proceeds to step S6. In step S6, the search unit 14 outputs the solution having the lowest energy value among the T solutions as the optimal solution.

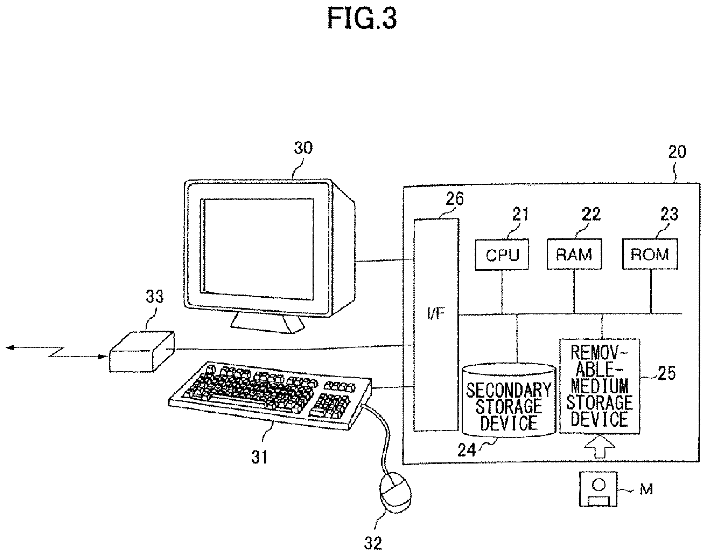

Fig. 3 is a drawing illustrating an example of the hardware configuration of a computer when the optimization apparatus is implemented as a processor executing software.

As illustrated in Fig. 3, the optimization apparatus for performing the optimization method as described above is implemented as a computer such as a personal computer, an engineering workstation, or the like The apparatus of Fig. 3 includes a computer 20, a display apparatus 30 connected to the computer 20, a communication apparatus 33, and an input apparatus. The input apparatus includes a keyboard 31 and a mouse 32. The computer 20 includes a CPU 21, a RAM 22, a ROM 23, a secondary storage device 24 such as a hard disk, a removable-medium storage device 25, and an interface 26.

The keyboard 31 and mouse 32 provide user interface, and receive various commands for operating the computer 20 and user responses responding to data requests or the like. The display apparatus 30 displays the results of processing by the computer 20, and further displays various data that makes it possible for the user to communicate with the computer 20. The communication apparatus 33 provides for communication to be conducted with a peripheral apparatus or with a remote site, and may include a modem, a network interface, a USB (universal serial bus), or the like.

The functions for implementing the optimization method are provided as a computer program executable by the computer 20. This computer program is stored in a memory medium M that is mountable to the removable-medium storage device 25. The computer program is loaded to the RAM 22 or to the secondary storage device 24 from the memory medium M through the removable-medium storage device 25. Alternatively, the computer program may be stored in a peripheral apparatus or in a remote memory medium (not shown), and is loaded to the RAM 22 or to the secondary storage device 24 from the remote memory medium through the communication apparatus 33 and the interface 26.

Upon user instruction for program execution entered through the keyboard 31 and/or the mouse 32, the CPU 21 loads the program to the RAM 22 from the memory medium M, the peripheral apparatus, the remote memory medium, or the secondary storage device 24. The CPU 21 executes the program loaded to the RAM 22 by use of an available memory space of the RAM 22 as a work area, and continues processing while communicating with the user as such a need arises. The ROM 23 stores therein control programs for the purpose of controlling basic operations of the computer 20.

By executing the computer program as described above, the computer 20 performs the optimization method as previously described.

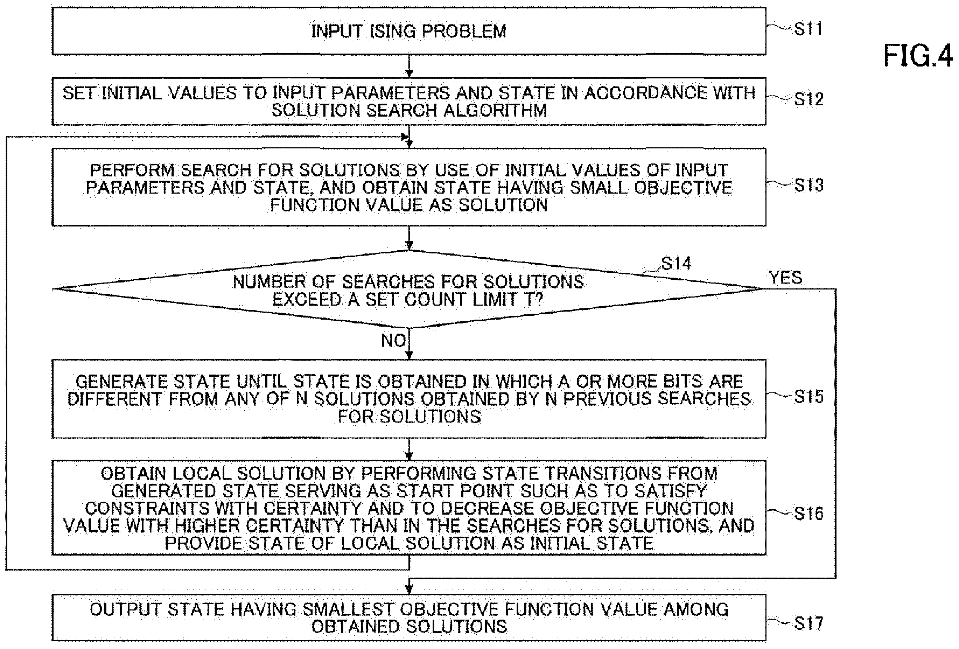

Fig. 4 is a flowchart illustrating the procedure of the optimization method according to a first embodiment. In step S11, an Ising problem is input. Specifically, the problem input unit 11 receives information specifying an Ising problem from an external source, similarly to step S1 previously described.

In step S12, input parameters and an initial state are set in accordance with the method used in the search for solutions. Specifically, the search-parameter and initial-state input unit 12 receives information indicative of an initial state and information indicative of parameters for search for solutions, similarly to step S2 previously described. This information includes the initial value of thermal noise (i.e., temperature), the rate of thermal noise (i.e., temperature) decrease, the initial state (e.g., a state in which all bits representing the spins are zero), a search count limit T, a threshold A indicative of a predetermined distance, the number N of solutions that are referred to, etc.

In step S13, the search unit 14 performs a search for solutions based on the input parameters and the initial state that have been set, thereby obtaining a state having a small objective function (energy) value as a solution. Specifically, the search unit 14 controls each state transition from a current state to a next state situated in the vicinity thereof based on a change in the value of energy resulting from the state transition, thereby finding a state in which the value of energy is as low as possible, similarly to step S3 previously described. The search unit 14 brings the search for solutions to an end when determination criteria are satisfied. The determination criteria may require that a predetermined number of calculations for state transitions have been performed, for example. The state S at the end of the search for solutions is the solution obtained in step S13.

In step S14, the search unit 14 checks whether the number of times searches for solutions have been performed exceeds the preset count limit T. If T solutions have not yet been obtained (in the case of "NO"), the procedure proceeds to step S15.

In step S15, the initial state generation unit 15 keeps randomly generating a state until a state in which a number A or more of the bits are different from any of the N solutions obtained in the previous N searches for solutions is generated. In doing so, when the number of searches for solutions having been performed in the past is less than N, all the solutions obtained by these previously performed searches for solutions may be used. When the number of searches for solutions having been performed in the past is greater than N, the N most recent solutions among all the solutions obtained by the previously performed searches for solutions may be used.

The initial state generation unit 15 further obtains a local solution by performing state transitions starting from the generated state such as to satisfy the constraints with certainty and to improve the value of an objective function (i.e., energy) with more certainty than in the case of the solution search algorithm, followed by outputting the obtained local solution as an initial state. In doing so, the value of an objective function may be monotonically improved (i.e., monotonous decreases in energy) in order to reduce the value of an objective function (i.e., energy) with certainty. Upon obtaining a local state to be used as an initial state in step S16, the procedure returns to step S13, and the processes in step S13 and the subsequent steps will be performed again. In this case, a search for solutions performed in step S13 starts from the initial state obtained in step S16 by the initial state generation unit 15.

After the completion of the search for solutions, a check for termination is made in step S14. If this check indicates that T solutions have already been obtained (in the case of "YES"), the procedure proceeds to step S17. In step S16, the search unit 14 outputs the solution having the lowest objective function value (i.e., the lowest energy value) among the T solutions as the optimal solution.

It may be noted again that, in step S14 previously described, the search unit 14 checks whether the number of times searches for solutions have been performed exceeds the preset count limit T. Namely, the search unit 14 terminates the iterative searches for solutions when the number of searches for solutions performed by the first method reaches the predetermined count limit T plus 1. Instead of checking the count, the search unit 14 may terminate the iterative searches for solutions when a total cumulative time having been used for the iterative searches for solutions performed by the first method reaches a predetermined amount of time. In this manner, the iterative searches for solutions may be terminated according to the search count or the search time, which allows a solution to be obtained without fail within a desired time period.

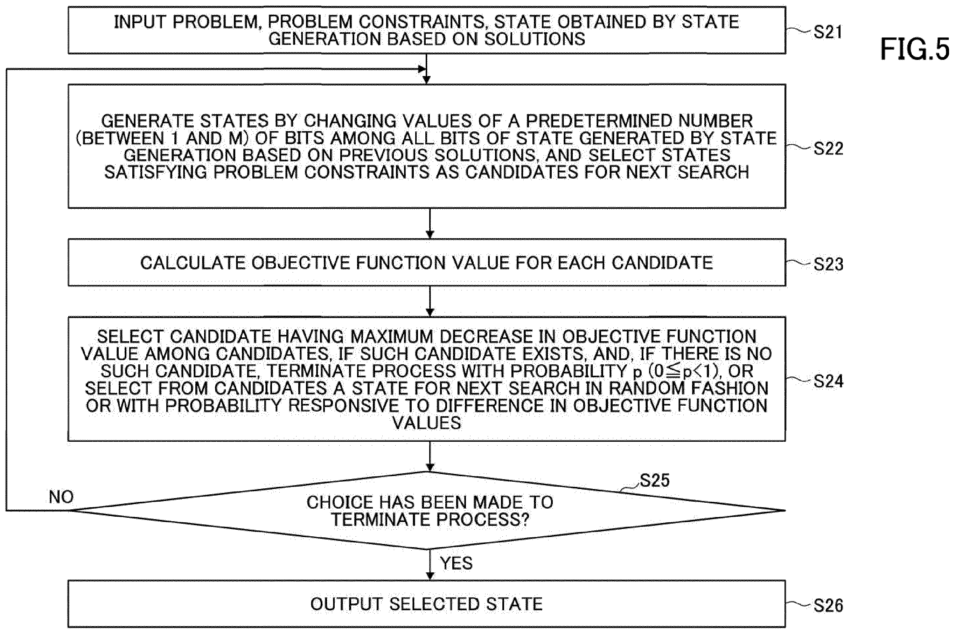

Fig. 5 is a flowchart illustrating an example of an algorithm based on which the initial state generation unit obtains a local solution. The process illustrated in this flowchart corresponds to the second method of the optimization method described in connection with Fig. 2 and also to the process of step S16 in Fig. 4, i.e., the method of performing state transitions such as to satisfy the constraints with certainty and to improve the value of energy with more certainty than in the case of the first method.

In step S21, a problem, the constraints of the problem, and a state obtained by the process of generating a state based on solutions are input. Specifically, the initial state generation unit 15 receives, from the search unit 14, an expression representing the formulated optimization problem, an expression (i.e., conditions) representing the constraints regarding solutions, and the solutions obtained in the past. It may be noted that, in step S15 of Fig. 4, the initial state generation unit 15 has randomly generated a state that satisfies the predetermined distance condition (i.e., a number A or more of the bits are different) with respect to the previous N solutions.

In step S22, the initial state generation unit 15 generates states by changing a predetermined number of bits, which is between 1 and M, among all the bits of a state that has been obtained by the process of generating a state based on the previously obtained solutions, and selects from these generated states one or more states that satisfy the problem constraints, as candidates for the next search. M is a number that is sufficiently smaller than the total number (L) of bits contained in a state, and is such a number that a state obtained by inverting M bits from the current state can be regarded as being situated in the vicinity of the current state.

An example will henceforth be considered in which L bits constituting a state are equally divided into 10 groups, for example, and the constraints require that the number of bits assuming the value of "1" is exactly one in each group. If the number of bits to be changed in a state transition is set to one, the condition that exactly 1 bit is 1 in each group is violated regardless of which one bit is selected and inverted from the current state that satisfies the constraints. On the other hand, if the number of bits to be changed in a state transition is set to two, the condition that exactly 1 bit is 1 in each group is still satisfied when selecting and inverting one bit from the current state that satisfies the constraints, and then inverting a bit having a value of 1 in the same group as the inverted bit. In step S22, a predetermined number of bits (e.g., two bits) that are between one bit and M bits are changed to generate all the states that satisfy the constraints. The generated states serve as candidates for the next search.

In step S23, the initial state generation unit 15 calculates the value of an objective function (i.e., energy) with respect to each of the candidates.

In step S23, the initial state generation unit 15 selects a candidate having a maximum decrease in the value of an objective function (i.e., energy value) among the candidates, if such a candidate exists. In the case in which no candidate has a decreased energy, the initial state generation unit 15 may terminate the process with probability p ($0 \leq$ p<1), or selects from the candidates a state for the next search in a random fashion or with the probability responsive to a difference in the objective function value (i.e., energy value). For example, a random number r ($0 \leq r \leq 1$) may be generated, and the process is terminated if the value of the random number r is less than or equal to p. In the case in which the value of the random number r is greater than p, a state may be randomly selected from the candidates, and may be used as the state for the next search. Alternatively, in the case in which the value of the random number r is greater than p, a state may e selected with the probability responsive to the energy difference $\Delta E$ (e.g., the smaller the energy increase indicated by $\Delta E$, the greater the probability of selection), and the selected state may be used as a state for the next search.

In step S25, the initial state generation unit 15 checks whether a choice to terminate the process has been made, i.e., whether a local solution has been determined. If the choice to terminate the process has not been made (in the case of "NO"), the procedure returns to step S22, and the processes in step S22 and the subsequent steps will be performed again. It may be noted that, when the process of step S22 is performed again, the state obtained for the next search in step S24 is used as a current state, and candidates for a further next search are obtained by changing the values of one to M bits from the current state.

If the check in step S25 indicates that a choice to terminate the process has been made (in the case of "YES"), the procedure proceeds to step S26. In step S26, the state subjected to the search at the time of terminating the process in step S24 (i.e., the local solution state from which the energy is not further reduced) is output as an initial state for the search for solutions to be performed by the search unit 14.

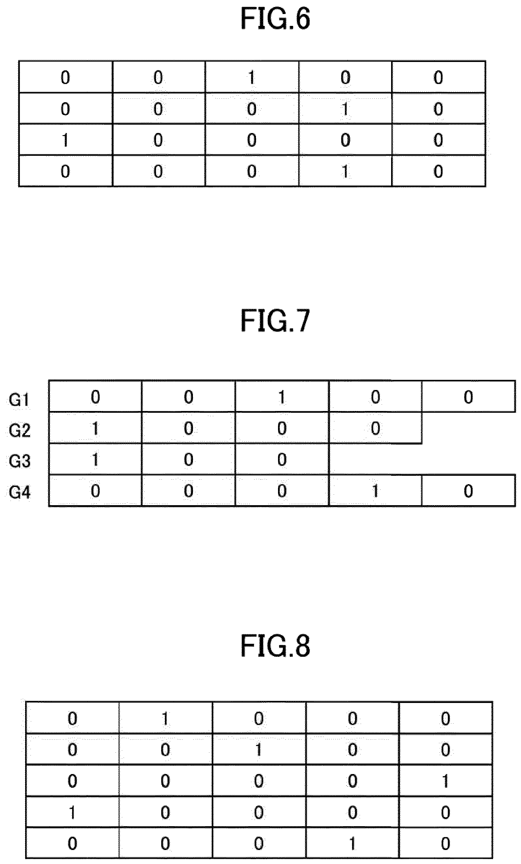

Fig. 6 is a drawing illustrating an example of constraints. The constraints illustrated in Fig. 6 may be used as constraints in the first embodiment of the optimization method illustrated in Fig. 4.

In the example illustrated in Fig. 6, a 20-bit-long state is equally divided into 4 groups (i.e., 4 rows illustrated in Fig. 6), each of which is 5 bits long. The constraints require that exactly one bit has a value of 1 in each group. Namely, the condition that the number of bits having a value of 1 is exactly one in each of the 4 rows illustrated in Fig. 6 is required.

In more general terms, an L-bit-long state whose length is a multiple of $\alpha$ bits may be divided into groups each having a $\alpha$-bit length. In such a case, a restraint term representing that the number of bits having a value of 1 is exactly one in each group is represented by the following formula for each group.

$$(\Sigma x_i - 1)^2 \qquad (4)$$

In the above equation, the symbol "$\Sigma$" refers to the sum (over every i from 1 to $\alpha$) of values of the $\alpha$ bits in the group of interest. The value of the restraint term illustrated in formula (4) is zero when the group of interest satisfies the constraints, and increases as the degree of violation of the constraints increases.

The restraint terms each represented by formula (4) for the respective groups may be multiplied by a predetermined coefficient, and may then be added to the Ising expression, thereby creating an expression of an objective function (i.e., energy) that represents the optimization problem containing the constraints. The search unit 14 searches for a solution such as to reduce the energy defined above as much as possible, which enables a solution having a reduced energy to be found while ensuring, with some certainty, that the solution satisfies the constraints. In order to increase the probability of satisfying the constraints, the coefficient noted above may be set to a sufficiently large value. It may be noted that, when the initial state generation unit 15 searches for a local solution, the initial state generation unit 15 not only searches to reduce the above-noted energy, but also only selects a state that satisfies the constraints as a state for further search as described in connection with Fig. 5, thereby causing the constraints to be expressly satisfied.

Fig. 7 is a drawing illustrating another example of constraints. The constraints illustrated in Fig. 7 may be used as constraints in the first embodiment of the optimization method illustrated in Fig. 4. In the example illustrated in Fig. 6, a 17-bit-long state is divided into groups having different bit lengths, which are denoted as 4 groups G1 through G4, with the constraints requiring that exactly one bit has a value of 1 in each group. Namely, the condition that the number of bits having a value of 1 is exactly one in each of the groups G1 through G4 illustrated in Fig. 7 is required. The generation of restraint terms and the generation of an objective function expression for the constraints noted above may be done similarly to the constraints illustrated in Fig. 6.

Fig. 8 is a drawing illustrating another example of constraints. The constraints illustrated in Fig. 8 may be used as constraints in the first embodiment of the optimization method illustrated in Fig. 4. In the example illustrated in Fig. 8, a 25-bit-long state is equally divided into 5 groups (i.e., 5 rows illustrated in Fig. 8), each of which is 5 bits long. The constraints require that exactly one bit has a value of 1 in each row (i.e., each group), and that exactly one bit has a value of 1 in each column. Namely, the conditions that the number of bits having a value of 1 is exactly one in each of the 5 rows illustrated in Fig. 8 and that the number of bits having a value of 1 is exactly one in each of the 5 columns are required. The restraint terms representing that the number of bits having a value of 1 is exactly one in each row (i.e., each group) and that the number of bits having a value of 1 is exactly one in each column may be generated by defining the same formula as formula (4) previously described with respect to each row and each column. The restraint terms generated for each row and each column may be multiplied by a predetermined coefficient, and may then be added to the Ising expression, thereby creating an expression of an objective function (i.e., energy) that represents the optimization problem containing the constraints.

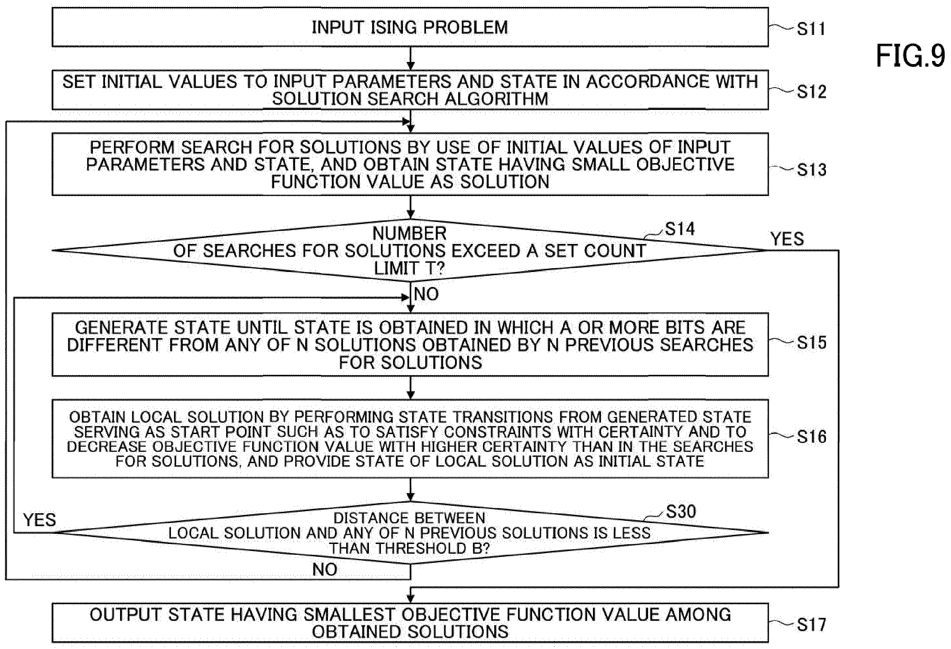

Fig. 9 is a flowchart illustrating the procedure of the optimization method according to a second embodiment. The optimization method according to the second embodiment differs from the optimization method of the first embodiment illustrated in Fig. 4 only in that there is an additional step S30. There are essentially no differences between the first embodiment and the second embodiment with respect to the processes performed in the other steps. It may be noted, however, that the input parameters set in step S12 include an additional threshold B relating to distance.

In Fig. 9, step S30 is performed after step S16 obtains a local solution that is to serve as an initial state. In step S30, the initial state generation unit 15 checks whether the distance between the obtained local solution and any one of the N previously obtained solutions is less than the threshold B. If the distance is less than the threshold B (in the case of "YES"), the procedure returns to step S15, and the processes in step S15 and the subsequent steps will be performed again. If the distance is greater than or equal to the threshold B (in the case of "NO"), the procedure returns to step S13, and a search for solutions is performed by using the initial state generated in step S16. In the second embodiment as described above, a local solution that is to serve as an initial state may be recalculated according to need, so that a sufficiently good initial state may be obtained that is at a distance more than the threshold B from the N previous solutions. With this arrangement, a needless search for solutions that may end up converging on an already obtained solution may be more reliably avoided.

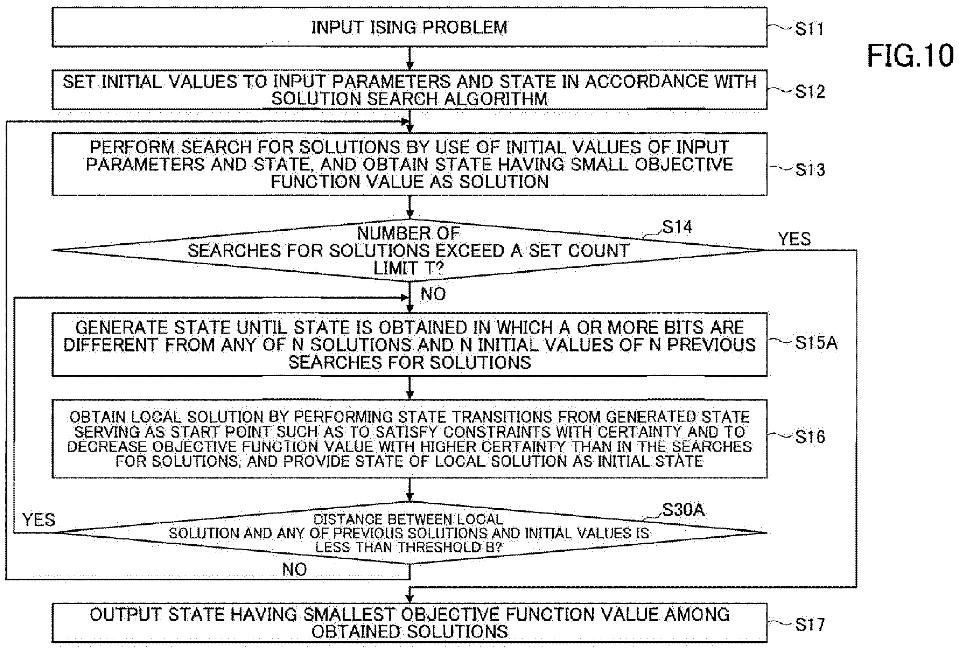

Fig. 10 is a flowchart illustrating the procedure of the optimization method according to a third embodiment. The optimization method according to the third embodiment differs from the optimization method of the second embodiment illustrated in Fig. 9 only in that step S15 and step S30 are replaced with step S15A and step S30A, respectively. There are essentially no differences between the second embodiment and the third embodiment with respect to the processes performed in the other steps.

In step S15A of Fig. 10, the initial state generation unit 15 keeps randomly generating a state until a state in which a number A or more of the bits are different from any of the N solutions and N initial values of the previous N searches for solutions is generated. Namely, in the process of randomly generating a state, not only the past N solutions but also the past N initial states are used in distance determination.

In step S30A of Fig. 10, further, the initial state generation unit 15 checks whether the distance between the obtained local solution and any of the past solutions and the past initial states is less than the threshold B. Namely, also in the process of checking whether the obtained local solution is satisfactory, not only the past N solutions but also the past N initial states are used in threshold-based determination.

In the third embodiment as described above, the initial state generation unit 15 obtains a first state that is at more than a predetermined distance from the previously obtained solutions and also from the initial states previously output from the initial state generation unit 15. Further, when the distance between the local solution obtained based on the first state and any of the solutions obtained in the past and the initial states output in the past is less than a predetermined threshold, the initial state generation unit 15 performs again the process of obtaining a local solution thereby to obtain a new local solution. In this manner, not only the previously obtained solutions but also the previously obtained initial states are referred to when determining an initial state for use in the next search for solutions. This arrangement serves to avoid performing the same or similar search for solutions as a search performed in the past. When a search for solutions is iteratively performed, thus, it is possible to perform searches for solutions from respective initial states that differ from each other as much as possible, thereby enabling a search for a solution closer to an optimal solution in a short time.

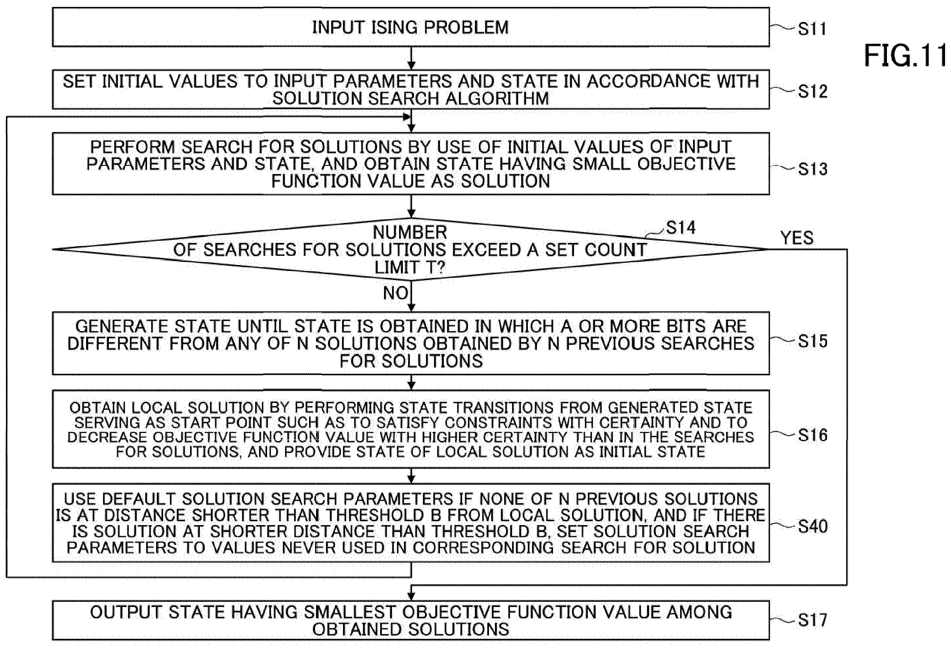

Fig. 11 is a flowchart illustrating the procedure of the optimization method according to a fourth embodiment. The optimization method according to the fourth embodiment differs from the optimization method of the first embodiment illustrated in Fig. 4 only in that there is an additional step S40. There are essentially no differences between the first embodiment and the fourth embodiment with respect to the processes performed in the other steps. It may be noted, however, that the input parameters set in step S12 include an additional threshold B relating to distance.

In Fig. 11, step S40 is performed after step S16 obtains a local solution that is to serve as an initial state. In step S40, the initial state generation unit 15 uses the default solution search parameters when none of the past N solutions is at a distance shorter than the threshold B from the local solution. When there is a solution at a distance shorter than the threshold B, solution search parameters are set to values that have not been used in the search for solutions that corresponds to such a solution.

In the fourth embodiment as described above, when the distance between the local solution and any of the previously obtained solutions is less than a predetermined threshold, the search unit 14 performs a search for solutions based on the solution search parameters different from the default values. For example, at least one of the initial value of thermal noise (i.e., temperature) and the rate of thermal noise (i.e., temperature) decrease may be set to a value different from the value set in step S12 to perform a search for solutions.

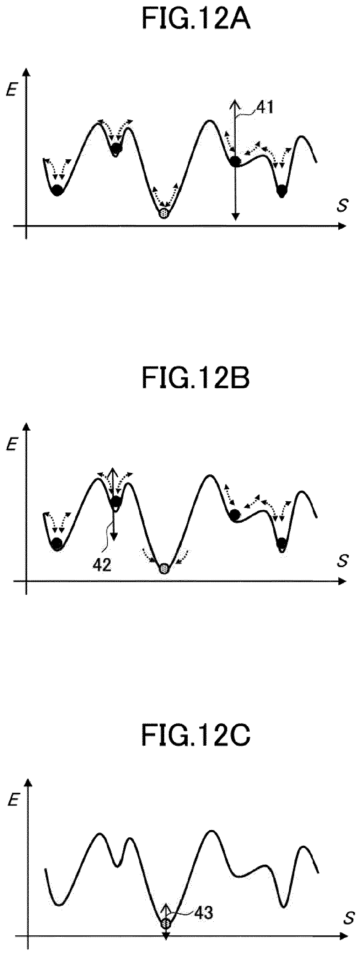

Figs. 12A through 12C are drawings illustrating differences in state transitions depending on the differences in temperature. In Figs. 12A to 12C, the horizontal axis schematically represents the distribution of states S in one dimension, and the vertical axis represents the energy E for each state. The amount by which the energy can change upon a state transition is schematically indicated by arrows 41 through 43. As is understood from equation (3) previously described, the higher the temperature (i.e., the lower the thermodynamic beta $\beta$) is, the higher the probability of a state transition causing a large energy change is. In Fig. 12A, temperature is high, and, as indicated by an arrow 41, a large energy change may occur upon a state transition. In Fig. 12B, temperature is intermediate, and a moderate energy change may occur upon a state transition. In Fig. 12C, temperature is low, and only a small energy change may occur upon a state transition.

When searching for solutions, temperature is gradually lowered from high temperature (i.e., as illustrated in Fig. 12A) to low temperature (i.e., as illustrated in Fig. 12C). Such lowering enables the obtainment of a solution close to an optimal solution without being stuck at a local solution where the energy is high. In such a process, a change in at least one of the initial value of temperature and the rate of temperature decrease (more specifically, the shape and slope of a temperature drop curve) causes the behavior of a search for solutions to be significantly changed. As a result, searches may converge on completely different solutions even upon starting from the same initial state.

In the fourth embodiment, when the distance between the local solution to serve as an initial state and any of the previously obtained solutions is less than a predetermined threshold, a search for solutions is performed based on solution search parameters different from the default values. With this arrangement, even if a new search for solutions is performed from an initial state similar to an initial state used in a previously performed search for solutions, a completely different solution may be obtained through a completely different search path than in the previous search for solutions. Namely, it is possible to avoid performing the same or similar search for solutions as a previously performed search for solutions, thereby enabling a solution closer to an optimal solution to be found in a shorter time.

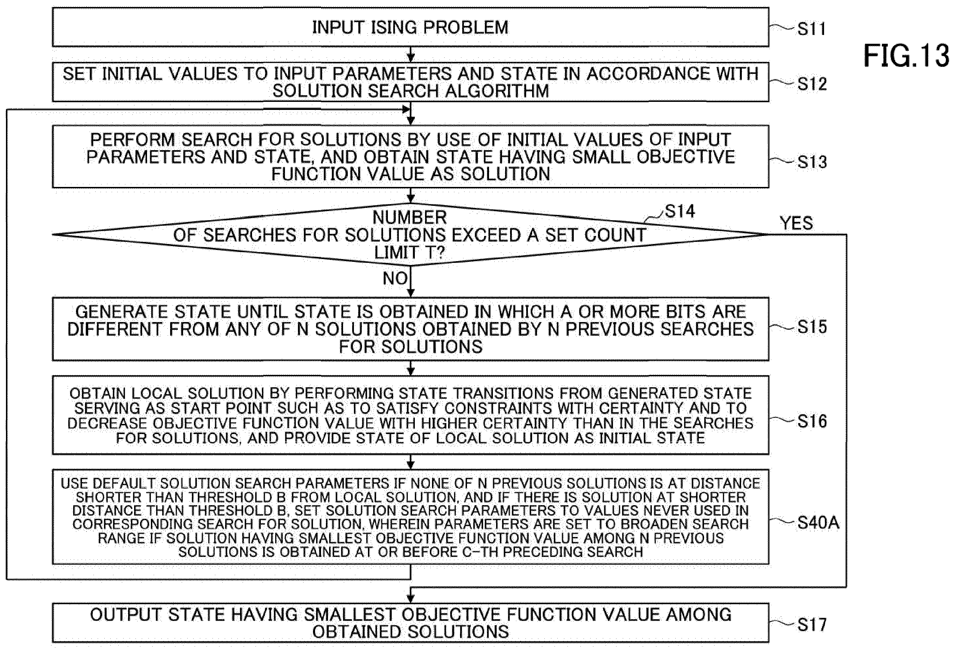

Fig. 13 is a flowchart illustrating the procedure of the optimization method according to a fifth embodiment. The optimization method according to the fifth embodiment differs from the optimization method of the fourth embodiment illustrated in Fig. 11 only in that step S40 is replaced with step S40A. There are essentially no differences between the fourth embodiment and the fifth embodiment with respect to the processes performed in the other steps. It may be noted, however, that the input parameters set in step S12 include an additional threshold C relating to a search count limit.

In step S40A of Fig. 13, the initial state generation unit 15 uses the default solution search parameters when none of the past N solutions is at a distance shorter than the threshold B from the local solution. When there is a solution at a distance shorter than the threshold B, solution search parameters are set to values that have not been used in the search for solutions that corresponds to such a solution. Further, in the case of setting the solution search parameters to values having not been used in the corresponding search for solutions, the initial state generation unit 15 uses a setting of solution search parameters such as to expand the search range when a solution having the minimum objective function value among the N previous solutions is obtained at or before the C-th preceding search.

The fifth embodiment as described above is such that, in the case of changing the solution search parameters, solution search parameters are set to values different from the default values such as to expand the search range of a search for solutions, when a solution having the smallest objective function value among the previously obtained solutions is obtained a predetermined number of searches ago. The fourth embodiment merely performs a search for solutions different from a previous search for solutions. In contrast, the fifth embodiment makes it possible to perform a search for solutions configured to expand the search range, compared with a previous search for solutions. For example, the initial value of temperature may be increased, or the rate of temperature decrease may be lowered (i.e., by reducing the slope of a temperature drop), so that the range of a search for solutions is expanded. Such a change of settings to expand the search range is made when the most satisfactory solution obtained in the past is obtained more than a predetermined number of searches ago. If a further improved solution cannot be obtained for a certain duration after the most satisfactory solution was obtained, there is a possibility that the solution search parameters may not be appropriate. In such a case, it may be reasonable to use settings that will broaden the search range, rather than simply changing the solution search parameters.

In the fifth embodiment described above, the solution search parameters are modified such as to utilize a search path that will search in a broader range than in a previous search for solutions, in the case in which the current situations do not allow a satisfactory solution to be readily obtained and, at the same time, it is preferable to modify the solution search parameters. With this arrangement, even if a new search for solutions is performed from an initial state similar to a previous initial state, a completely different solution may be obtained through a search path that will search a broader range than in the previous search for solutions. Namely, it is possible to perform a search for solutions covering a wider range than in a previously performed search for solutions, thereby enabling a solution closer to an optimal solution to be found in a shorter time.

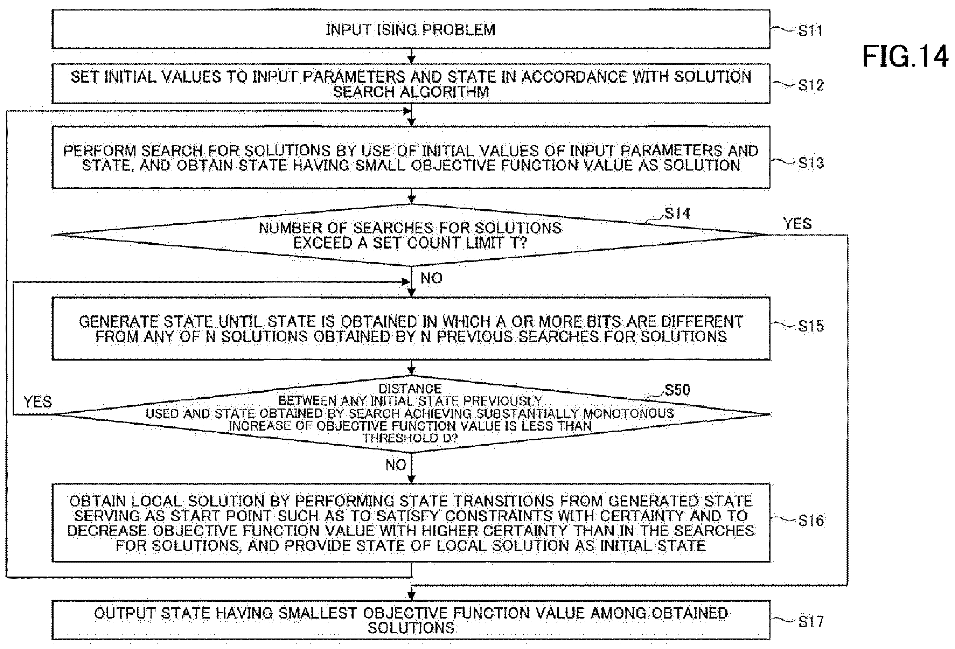

Fig. 14 is a flowchart illustrating the procedure of the optimization method according to a sixth embodiment. The optimization method according to the sixth embodiment differs from the optimization method of the first embodiment illustrated in Fig. 4 only in that there is an additional step S50. There are essentially no differences between the first embodiment and the sixth embodiment with respect to the processes performed in the other steps. It may be noted, however, that the input parameters set in step S12 include an additional threshold D relating to distance.

In Fig. 14, step S50 is performed after step S15 that randomly generates a state satisfying predetermined distance conditions. In step S50, the initial state generation unit 15 checks whether the distance between any initial state previously used and a state (i.e., maximal point) obtained by a search achieving a substantially monotonous increase of an objective function value (i.e., energy) from the generated state is less than the threshold D. If the distance is less than the threshold D (in the case of "YES"), the procedure returns to step S15, and the processes in step S15 and the subsequent steps will be performed again. If the distance is greater than or equal to the threshold D (in the case of "NO"), the procedure goes to step S16. Here, the expression "a search achieving a substantially monotonous increase" is intended to mean that some probabilistic element may be introduced without problem. In general, a search may be conducted to find a maximal point by achieving a monotonous energy increase. Namely, a greedy method may be used to find a maximal point

In the sixth embodiment described above, a maximal point is obtained by a search achieving a monotonous worsening of an objective function value, and the process of randomly generating a state is performed again to find a new state when the distance between the state at the maximal point and any previously output initial state is less than a predetermined threshold. Even if the first state initially obtained is at a sufficient distance from the previous solutions, the state of the maximal point reached by climbing from such a first state may be close to a previous initial state. In such a case, the first state and the previous initial state may be separated by only one peak or so. In this case, a search for solutions performed by avoiding getting stuck at a local solution may come close to the previous initial state, thereby ending up being a wasted search. Generating a new first state thus may be preferable to remove such a risk. With this arrangement, a needless search for solutions that may end up converging on an already obtained solution may be more reliably avoided.

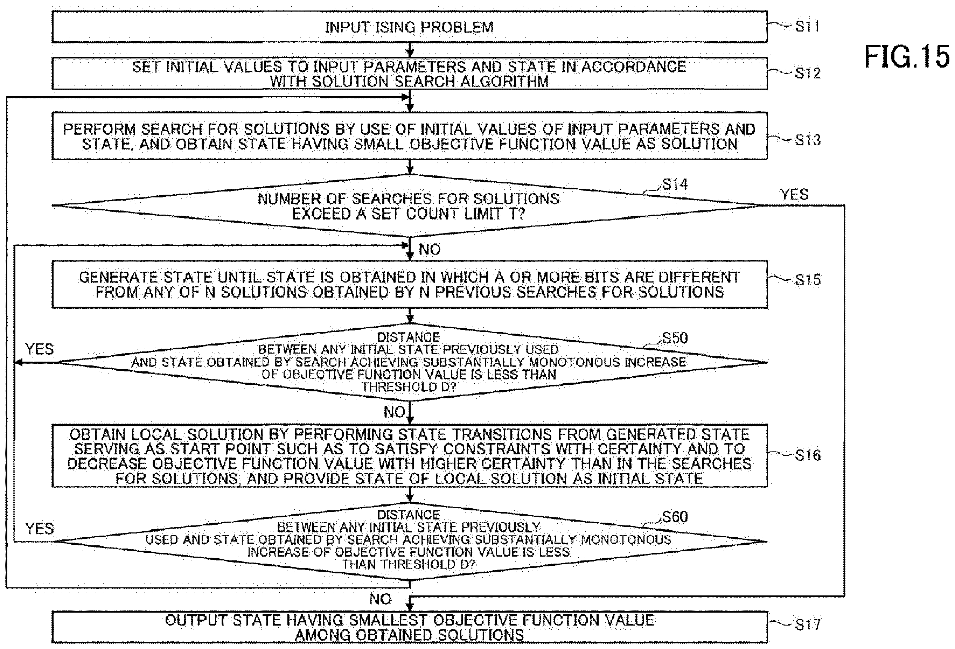

Fig. 15 is a flowchart illustrating the procedure of the optimization method according to a seventh embodiment. The optimization method according to the seventh embodiment differs from the optimization method of the sixth embodiment illustrated in Fig. 14 only in that there is an additional step S60. There are essentially no differences between the sixth embodiment and the seventh embodiment with respect to the processes performed in the other steps.

In Fig. 15, step S60 is performed after step S16 that obtains a local solution. In step S60, the initial state generation unit 15 checks whether the distance between any initial state previously used and a state (i.e., maximal point) obtained by a search achieving a substantially monotonous increase of an objective function value (i.e., energy) from the obtained local solution is less than the threshold D. If the distance is less than the threshold D (in the case of "YES"), the procedure returns to step S15, and the processes in step S15 and the subsequent steps will be performed again. If the distance is greater than or equal to the threshold D (in the case of "NO"), the procedure goes to step S13. Here, the expression "a search achieving a substantially monotonous increase" is intended to mean that some probabilistic element may be introduced without problem. In general, a search may be conducted to find a maximal point by achieving a monotonous energy increase. Namely, a greedy method may be used to find a maximal point The threshold used in step S50 and the threshold used in step S60 may be the same, or may be different from each other.

In the seventh embodiment described above, a second maximal point is obtained by a search achieving a monotonous worsening of an objective function value from the local solution, and the process of generating a state is performed again to find a new state when the distance between the state at the second maximal point and any previously output initial state is less than a predetermined threshold. Even if the local solution initially obtained is at a sufficient distance from the previous solutions, the state of the maximal point reached by climbing from such a local solution may be close to a previous initial state. In such a case, the local state and the previous initial state may be separated by only one peak or so. In this case, a search for solutions performed by avoiding getting stuck at a local solution may come close to the previous initial state, thereby ending up being a wasted search. Generating a new state to find a new local solution thus may be preferable to remove such a risk. With this arrangement, a needless search for solutions that may end up converging on an already obtained solution may be more reliably avoided.

According to at least one embodiment, a proper initial state is set when a search for solutions is repeated from a different initial state.

**Claims**

1. An optimization apparatus, comprising:

a search unit configured to perform a search for solutions by using a first method by which a value of an objective function including constraints as restraint conditions is probabilistically improved; and
an initial state generation unit configured to generate a first state that is at more than a predetermined distance from one or more previous solutions obtained by the search unit, and to obtain a local solution by use of a second method by which state transitions starting from the first state are performed such as to satisfy the constraints and to improve the value of the objective function with a higher probability than by the first method, followed by outputting the local solution as an initial state,
wherein a process of the initial state generation unit outputting the initial state and a process of the search unit performing the search for solutions based on the first method from the initial state are iteratively performed.

2. The optimization apparatus as claimed in claim 1, wherein the search unit is configured to terminate iterative searches for solutions based on the first method when a total number of the iterative searches for solutions based on the first method reaches a predetermined count, or when a cumulative time of the iterative searches for solutions based on the first method reaches a predetermined amount of time.

3. The optimization apparatus as claimed in claim 1 or 2, wherein the second method performs state transitions such that the constraints are satisfied and such that the value of the objective function monotonically increases.

4. The optimization apparatus as claimed in any one of claims 1 to 3, wherein when a distance between the local solution and any of the one or more previous solutions is less than a predetermined threshold, the initial state generation unit repeats a process of generating the first state and obtaining the local solution based on the second method, thereby to obtain a new local solution.

5. The optimization apparatus as claimed in claim 4, wherein the initial state generation unit is configured to obtain the first state such that the first state is at more than the predetermined distance from the one or more previous solutions obtained by the search unit and such that the first state is at more than the predetermined distance from each said initial state previously output, and
wherein when a distance between the local solution obtained based on the first state and any of the one or more previous solutions and each said initial state previously output is less than the predetermined threshold, the initial state generation unit repeats the process of generating the first state and obtaining the local solution based on the second method, thereby to obtain a new local solution.

**6.** The optimization apparatus as claimed in any one of claims 1 to 3, wherein when a distance between the local solution and any of the one or more previous solutions is less than a predetermined threshold, the search unit performs a search for solutions based on the first method by use of solution search parameters different from default values.

**7.** The optimization apparatus as claimed in claim 6, wherein when the distance between the local solution and any of the one or more previous solutions is less than the predetermined threshold, and a solution having a smallest value of the objective function among the one or more previous solutions is obtained more than a predetermined number of searches ago, the search unit performs a search for solutions based on the first method by use of solution search parameters that are different from default values and that are set such as to broaden a search range of the search for solutions.

**8.** The optimization apparatus as claimed in claim 1, wherein the initial state generation unit is configured to obtain an extremal value having an unfavorable value of the objective function by performing a search achieving a monotonous worsening of the value of the objective function from the first state, and is configured to repeat a process of generating the first state to obtain a new first state when a distance between a state at the extremal value and each said initial state previously output is less than a predetermined threshold.

**9.** The optimization apparatus as claimed in claim 8, wherein the initial state generation unit is configured to obtain a second extremal value having an unfavorable value of the objective function by performing a search achieving a monotonous worsening of the value of the objective function from the local solution, and is configured to repeat a process of generating the first state to obtain a new first state when a distance between a state at the second extremal value and each said initial state previously output is less than a predetermined threshold.

**10.** A program stored in a computer-readable recording medium for causing a computer to perform procedures of:

performing a search for solutions by using a first method by which a value of an objective function including constraints as restraint conditions is probabilistically improved;
generating a first state that is at more than a predetermined distance from one or more solutions previously obtained by the search for solutions, and obtaining a local solution by use of a second method by which state transitions starting from the first state are performed such as to satisfy the constraints and to improve the value of the objective function with a higher probability than by the first method, followed by outputting the local solution as an initial state; and
iteratively performing a process of outputting the initial state and a process of performing the search for solutions based on the first method from the initial state.

**11.** An optimization method, comprising:

performing a search for solutions by using a first method by which a value of an objective function including constraints as restraint conditions is probabilistically improved;
generating a first state that is at more than a predetermined distance from one or more solutions previously obtained by the search for solutions, and obtaining a local solution by use of a second method by which state transitions starting from the first state are performed such as to satisfy the constraints and to improve the value of the objective function with a higher probability than by the first method, followed by outputting the local solution as an initial state; and
iteratively performing a process of outputting the initial state and a process of performing the search for solutions based on the first method from the initial state.

# FIG.1

PROBLEM → PROBLEM INPUT UNIT (11)

PROBLEM SEARCH PARAMETERS & INITIAL STATE → SEARCH-PARAMETER AND INITIAL-STATE INPUT UNIT (12)

PROBLEM CONSTRAINTS → PROBLEM-CONSTRAINT INPUT UNIT (13)

PROBLEM → SEARCH UNIT (14) → OPTIMAL SOLUTION

INPUT PARAMETERS & INITIAL STATE

INITIAL STATE / PROBLEM & PREVIOUS SOLUTIONS

INITIAL STATE GENERATION UNIT (15)

PROBLEM CONSTRAINTS

10

EP 3 792 788 A1

# FIG.2

```
                                            S1
┌─────────────────────────────┐
│      INPUT ISING PROBLEM     │
└─────────────────────────────┘
               │
               ▼                S2                                      S5
┌─────────────────────────────┐         ┌──────────────────────────────┐
│   SET INPUT PARAMETERS AND   │         │ GENERATE INITIAL STATE BASED │
│            STATE             │◄────────│  ON PREVIOUS SOLUTIONS AND   │
└─────────────────────────────┘         │     PROBLEM CONSTRAINTS      │
               │                S3        └──────────────────────────────┘
               ▼                                          ▲
┌─────────────────────────────┐                          │
│     PERFORM SEARCH FOR       │                          │
│          SOLUTIONS           │                          │
└─────────────────────────────┘                          │
               │                S4                        │
               ▼                                          │
┌─────────────────────────────┐                          │
│    CHECK FOR TERMINATION     │──────────────────────────┘
└─────────────────────────────┘
               │                S6
               ▼
┌─────────────────────────────┐
│       OUTPUT RESULTS         │
└─────────────────────────────┘
```

# FIG.3

EP 3 792 788 A1

FIG.4

```
┌─────────────────────────────────────────────────────────────┐
│                    INPUT ISING PROBLEM                        │─── S11
└─────────────────────────────────────────────────────────────┘
                              │
                              ▼
┌─────────────────────────────────────────────────────────────┐
│ SET INITIAL VALUES TO INPUT PARAMETERS AND STATE IN ACCORDANCE│─── S12
│ WITH SOLUTION SEARCH ALGORITHM                                │
└─────────────────────────────────────────────────────────────┘
                              │
                              ▼
┌─────────────────────────────────────────────────────────────┐
│ PERFORM SEARCH FOR SOLUTIONS BY USE OF INITIAL VALUES OF INPUT│─── S13
│ PARAMETERS AND STATE, AND OBTAIN STATE HAVING SMALL OBJECTIVE │
│ FUNCTION VALUE AS SOLUTION                                    │
└─────────────────────────────────────────────────────────────┘
                              │
                              ▼
         ◇ NUMBER OF SEARCHES FOR SOLUTIONS           S14   YES
         ◇ EXCEED A SET COUNT LIMIT T?                ────────►
                              │ NO
                              ▼
┌─────────────────────────────────────────────────────────────┐
│ GENERATE STATE UNTIL STATE IS OBTAINED IN WHICH A OR MORE BITS│─── S15
│ ARE DIFFERENT FROM ANY OF N SOLUTIONS OBTAINED BY N PREVIOUS  │
│ SEARCHES FOR SOLUTIONS                                        │
└─────────────────────────────────────────────────────────────┘
                              │
                              ▼
┌─────────────────────────────────────────────────────────────┐
│ OBTAIN LOCAL SOLUTION BY PERFORMING STATE TRANSITIONS FROM    │─── S16
│ GENERATED STATE SERVING AS START POINT SUCH AS TO SATISFY     │
│ CONSTRAINTS WITH CERTAINTY AND TO DECREASE OBJECTIVE FUNCTION │
│ VALUE WITH HIGHER CERTAINTY THAN IN THE SEARCHES FOR          │
│ SOLUTIONS, AND PROVIDE STATE OF LOCAL SOLUTION AS INITIAL     │
│ STATE                                                         │
└─────────────────────────────────────────────────────────────┘
                              │
                              ▼
┌─────────────────────────────────────────────────────────────┐
│ OUTPUT STATE HAVING SMALLEST OBJECTIVE FUNCTION VALUE AMONG   │─── S17
│ OBTAINED SOLUTIONS                                            │
└─────────────────────────────────────────────────────────────┘
```

FIG.5

INPUT PROBLEM, PROBLEM CONSTRAINTS, STATE OBTAINED BY STATE GENERATION BASED ON SOLUTIONS —S21

GENERATE STATES BY CHANGING VALUES OF A PREDETERMINED NUMBER (BETWEEN 1 AND M) OF BITS AMONG ALL BITS OF STATE GENERATED BY STATE GENERATION BASED ON PREVIOUS SOLUTIONS, AND SELECT STATES SATISFYING PROBLEM CONSTRAINTS AS CANDIDATES FOR NEXT SEARCH —S22

CALCULATE OBJECTIVE FUNCTION VALUE FOR EACH CANDIDATE —S23

SELECT CANDIDATE HAVING MAXIMUM DECREASE IN OBJECTIVE FUNCTION VALUE AMONG CANDIDATES, IF SUCH CANDIDATE EXISTS, AND, IF THERE IS NO SUCH CANDIDATE, TERMINATE PROCESS WITH PROBABILITY p $(0 \leqq p < 1)$, OR SELECT FROM CANDIDATES A STATE FOR NEXT SEARCH IN RANDOM FASHION OR WITH PROBABILITY RESPONSIVE TO DIFFERENCE IN OBJECTIVE FUNCTION VALUES —S24

S25
NO — CHOICE HAS BEEN MADE TO TERMINATE PROCESS?

YES

OUTPUT SELECTED STATE —S26

EP 3 792 788 A1

18

## FIG.6

| 0 | 0 | 1 | 0 | 0 |
|---|---|---|---|---|
| 0 | 0 | 0 | 1 | 0 |
| 1 | 0 | 0 | 0 | 0 |
| 0 | 0 | 0 | 1 | 0 |

## FIG.7

|     |   |   |   |   |   |
|-----|---|---|---|---|---|
| G1  | 0 | 0 | 1 | 0 | 0 |
| G2  | 1 | 0 | 0 | 0 |   |
| G3  | 1 | 0 | 0 |   |   |
| G4  | 0 | 0 | 0 | 1 | 0 |

## FIG.8

| 0 | 1 | 0 | 0 | 0 |
|---|---|---|---|---|
| 0 | 0 | 1 | 0 | 0 |
| 0 | 0 | 0 | 0 | 1 |
| 1 | 0 | 0 | 0 | 0 |
| 0 | 0 | 0 | 1 | 0 |

FIG.9

EP 3 792 788 A1

```
┌──────────────────────────────────────────────────────────────┐
│                    INPUT ISING PROBLEM                         │── S11
└──────────────────────────────────────────────────────────────┘
                            │
                            ▼
┌──────────────────────────────────────────────────────────────┐
│  SET INITIAL VALUES TO INPUT PARAMETERS AND STATE IN          │
│  ACCORDANCE WITH SOLUTION SEARCH ALGORITHM                    │── S12
└──────────────────────────────────────────────────────────────┘
                            │
                            ▼
┌──────────────────────────────────────────────────────────────┐
│  PERFORM SEARCH FOR SOLUTIONS BY USE OF INITIAL VALUES OF     │
│  INPUT PARAMETERS AND STATE, AND OBTAIN STATE HAVING SMALL    │── S13
│  OBJECTIVE FUNCTION VALUE AS SOLUTION                         │
└──────────────────────────────────────────────────────────────┘
                            │
                            ▼
            NUMBER OF SEARCHES FOR SOLUTIONS EXCEED A          S14
            SET COUNT LIMIT T?                          ───────── YES
                            │ NO
                            ▼
┌──────────────────────────────────────────────────────────────┐
│  GENERATE STATE UNTIL STATE IS OBTAINED IN WHICH A OR MORE    │
│  BITS ARE DIFFERENT FROM ANY OF N SOLUTIONS OBTAINED BY N     │── S15
│  PREVIOUS SEARCHES FOR SOLUTIONS                             │
└──────────────────────────────────────────────────────────────┘
                            │
                            ▼
┌──────────────────────────────────────────────────────────────┐
│  OBTAIN LOCAL SOLUTION BY PERFORMING STATE TRANSITIONS FROM   │
│  GENERATED STATE SERVING AS START POINT SUCH AS TO SATISFY    │
│  CONSTRAINTS WITH CERTAINTY AND TO DECREASE OBJECTIVE         │── S16
│  FUNCTION VALUE WITH HIGHER CERTAINTY THAN IN THE SEARCHES    │
│  FOR SOLUTIONS, AND PROVIDE STATE OF LOCAL SOLUTION AS        │
│  INITIAL STATE                                               │
└──────────────────────────────────────────────────────────────┘
                            │
                            ▼
   YES          DISTANCE BETWEEN LOCAL SOLUTION AND ANY OF     S30
    ─────────   N PREVIOUS SOLUTIONS IS LESS THAN THRESHOLD B?
                            │ NO
                            ▼
┌──────────────────────────────────────────────────────────────┐
│  OUTPUT STATE HAVING SMALLEST OBJECTIVE FUNCTION VALUE        │── S17
│  AMONG OBTAINED SOLUTIONS                                     │
└──────────────────────────────────────────────────────────────┘
```

FIG.10

```
┌──────────────────────────────────────────────────────────────────┐
│                       INPUT ISING PROBLEM                          │──S11
└──────────────────────────────────────────────────────────────────┘
                                   │
                                   ▼
┌──────────────────────────────────────────────────────────────────┐
│ SET INITIAL VALUES TO INPUT PARAMETERS AND STATE IN ACCORDANCE WITH│──S12
│                   SOLUTION SEARCH ALGORITHM                        │
└──────────────────────────────────────────────────────────────────┘
```

PERFORM SEARCH FOR SOLUTIONS BY USE OF INITIAL VALUES OF INPUT PARAMETERS AND STATE, AND OBTAIN STATE HAVING SMALL OBJECTIVE FUNCTION VALUE AS SOLUTION — S13

NUMBER OF SEARCHES FOR SOLUTIONS EXCEED A SET COUNT LIMIT T? — S14    YES

NO

GENERATE STATE UNTIL STATE IS OBTAINED IN WHICH A OR MORE BITS ARE DIFFERENT FROM ANY OF N SOLUTIONS AND N INITIAL VALUES OF N PREVIOUS SEARCHES FOR SOLUTIONS — S15A

OBTAIN LOCAL SOLUTION BY PERFORMING STATE TRANSITIONS FROM GENERATED STATE SERVING AS START POINT SUCH AS TO SATISFY CONSTRAINTS WITH CERTAINTY AND TO DECREASE OBJECTIVE FUNCTION VALUE WITH HIGHER CERTAINTY THAN IN THE SEARCHES FOR SOLUTIONS, AND PROVIDE STATE OF LOCAL SOLUTION AS INITIAL STATE — S16

YES    DISTANCE BETWEEN LOCAL SOLUTION AND ANY OF PREVIOUS SOLUTIONS AND INITIAL VALUES IS LESS THAN THRESHOLD B? — S30A

NO

OUTPUT STATE HAVING SMALLEST OBJECTIVE FUNCTION VALUE AMONG OBTAINED SOLUTIONS — S17

EP 3 792 788 A1

21

FIG.11

```
┌─────────────────────────────────────────────────────────────────────┐
│                      INPUT ISING PROBLEM                              │── S11
└─────────────────────────────────────────────────────────────────────┘
                                   │
                                   ▼
┌─────────────────────────────────────────────────────────────────────┐
│ SET INITIAL VALUES TO INPUT PARAMETERS AND STATE IN ACCORDANCE WITH   │── S12
│                   SOLUTION SEARCH ALGORITHM                           │
└─────────────────────────────────────────────────────────────────────┘
                                   │
                                   ▼
┌─────────────────────────────────────────────────────────────────────┐
│ PERFORM SEARCH FOR SOLUTIONS BY USE OF INITIAL VALUES OF INPUT        │── S13
│ PARAMETERS AND STATE, AND OBTAIN STATE HAVING SMALL OBJECTIVE         │
│                   FUNCTION VALUE AS SOLUTION                          │
└─────────────────────────────────────────────────────────────────────┘
                                   │
                                   ▼
                            NUMBER                          S14      YES
            OF SEARCHES FOR SOLUTIONS EXCEED A SET COUNT ──────────────────►
                            LIMIT T?
                                   │
                                  NO
                                   ▼
┌─────────────────────────────────────────────────────────────────────┐
│ GENERATE STATE UNTIL STATE IS OBTAINED IN WHICH A OR MORE BITS ARE    │── S15
│ DIFFERENT FROM ANY OF N SOLUTIONS OBTAINED BY N PREVIOUS SEARCHES     │
│                        FOR SOLUTIONS                                  │
└─────────────────────────────────────────────────────────────────────┘
                                   │
                                   ▼
┌─────────────────────────────────────────────────────────────────────┐
│ OBTAIN LOCAL SOLUTION BY PERFORMING STATE TRANSITIONS FROM GENERATED  │── S16
│ STATE SERVING AS START POINT SUCH AS TO SATISFY CONSTRAINTS WITH      │
│ CERTAINTY AND TO DECREASE OBJECTIVE FUNCTION VALUE WITH HIGHER        │
│ CERTAINTY THAN IN THE SEARCHES FOR SOLUTIONS, AND PROVIDE STATE OF    │
│                LOCAL SOLUTION AS INITIAL STATE                        │
└─────────────────────────────────────────────────────────────────────┘
                                   │
                                   ▼
┌─────────────────────────────────────────────────────────────────────┐
│ USE DEFAULT SOLUTION SEARCH PARAMETERS IF NONE OF N PREVIOUS          │── S40
│ SOLUTIONS IS AT DISTANCE SHORTER THAN THRESHOLD B FROM LOCAL          │
│ SOLUTION, AND IF THERE IS SOLUTION AT SHORTER DISTANCE THAN           │
│ THRESHOLD B, SET SOLUTION SEARCH PARAMETERS TO VALUES NEVER USED      │
│              IN CORRESPONDING SEARCH FOR SOLUTION                     │
└─────────────────────────────────────────────────────────────────────┘
                                   │
                                   ▼
┌─────────────────────────────────────────────────────────────────────┐
│ OUTPUT STATE HAVING SMALLEST OBJECTIVE FUNCTION VALUE AMONG           │── S17
│                   OBTAINED SOLUTIONS                                  │
└─────────────────────────────────────────────────────────────────────┘
```

EP 3 792 788 A1

# FIG.12A

# FIG.12B

# FIG.12C

FIG.13

EP 3 792 788 A1

```
┌─────────────────────────────────────────────────────────────────┐
│                      INPUT ISING PROBLEM                          │~S11
└─────────────────────────────────────────────────────────────────┘
                                │
┌─────────────────────────────────────────────────────────────────┐
│  SET INITIAL VALUES TO INPUT PARAMETERS AND STATE IN ACCORDANCE   │
│              WITH SOLUTION SEARCH ALGORITHM                        │~S12
└─────────────────────────────────────────────────────────────────┘
```

PERFORM SEARCH FOR SOLUTIONS BY USE OF INITIAL VALUES OF INPUT PARAMETERS AND STATE, AND OBTAIN STATE HAVING SMALL OBJECTIVE FUNCTION VALUE AS SOLUTION ~S13

NUMBER OF SEARCHES FOR SOLUTIONS EXCEED A SET COUNT LIMIT T? ~S14   YES

NO

GENERATE STATE UNTIL STATE IS OBTAINED IN WHICH A OR MORE BITS ARE DIFFERENT FROM ANY OF N SOLUTIONS OBTAINED BY N PREVIOUS SEARCHES FOR SOLUTIONS ~S15

OBTAIN LOCAL SOLUTION BY PERFORMING STATE TRANSITIONS FROM GENERATED STATE SERVING AS START POINT SUCH AS TO SATISFY CONSTRAINTS WITH CERTAINTY AND TO DECREASE OBJECTIVE FUNCTION VALUE WITH HIGHER CERTAINTY THAN IN THE SEARCHES FOR SOLUTIONS, AND PROVIDE STATE OF LOCAL SOLUTION AS INITIAL STATE ~S16

USE DEFAULT SOLUTION SEARCH PARAMETERS IF NONE OF N PREVIOUS SOLUTIONS IS AT DISTANCE SHORTER THAN THRESHOLD B FROM LOCAL SOLUTION, AND IF THERE IS SOLUTION AT SHORTER DISTANCE THAN THRESHOLD B, SET SOLUTION SEARCH PARAMETERS TO VALUES NEVER USED IN CORRESPONDING SEARCH FOR SOLUTION, WHEREIN PARAMETERS ARE SET TO BROADEN SEARCH RANGE IF SOLUTION HAVING SMALLEST OBJECTIVE FUNCTION VALUE AMONG N PREVIOUS SOLUTIONS IS OBTAINED AT OR BEFORE C-TH PRECEDING SEARCH ~S40A

OUTPUT STATE HAVING SMALLEST OBJECTIVE FUNCTION VALUE AMONG OBTAINED SOLUTIONS ~S17

**FIG.14**

```
┌─────────────────────────────────────────────────────────────────┐
│                     INPUT ISING PROBLEM                           │──S11
└─────────────────────────────────────────────────────────────────┘
                                │
┌─────────────────────────────────────────────────────────────────┐
│ SET INITIAL VALUES TO INPUT PARAMETERS AND STATE IN ACCORDANCE    │──S12
│           WITH SOLUTION SEARCH ALGORITHM                          │
└─────────────────────────────────────────────────────────────────┘
                                │
┌─────────────────────────────────────────────────────────────────┐
│ PERFORM SEARCH FOR SOLUTIONS BY USE OF INITIAL VALUES OF INPUT    │──S13
│ PARAMETERS AND STATE, AND OBTAIN STATE HAVING SMALL OBJECTIVE     │
│              FUNCTION VALUE AS SOLUTION                           │
└─────────────────────────────────────────────────────────────────┘
                                │
             NUMBER OF SEARCHES FOR SOLUTIONS          S14    YES
             EXCEED A SET COUNT LIMIT T?
                                │ NO
┌─────────────────────────────────────────────────────────────────┐
│ GENERATE STATE UNTIL STATE IS OBTAINED IN WHICH A OR MORE BITS    │──S15
│ ARE DIFFERENT FROM ANY OF N SOLUTIONS OBTAINED BY N PREVIOUS      │
│                   SEARCHES FOR SOLUTIONS                          │
└─────────────────────────────────────────────────────────────────┘
                                │
                          DISTANCE                        S50
     YES        BETWEEN ANY INITIAL STATE PREVIOUSLY
          USED AND STATE OBTAINED BY SEARCH ACHIEVING SUBSTANTIALLY
              MONOTONOUS INCREASE OF OBJECTIVE FUNCTION VALUE IS
                     LESS THAN THRESHOLD D?
                                │ NO
┌─────────────────────────────────────────────────────────────────┐
│ OBTAIN LOCAL SOLUTION BY PERFORMING STATE TRANSITIONS FROM        │──S16
│ GENERATED STATE SERVING AS START POINT SUCH AS TO SATISFY         │
│ CONSTRAINTS WITH CERTAINTY AND TO DECREASE OBJECTIVE FUNCTION     │
│ VALUE WITH HIGHER CERTAINTY THAN IN THE SEARCHES FOR SOLUTIONS,   │
│ AND PROVIDE STATE OF LOCAL SOLUTION AS INITIAL STATE              │
└─────────────────────────────────────────────────────────────────┘
                                │
┌─────────────────────────────────────────────────────────────────┐
│ OUTPUT STATE HAVING SMALLEST OBJECTIVE FUNCTION VALUE AMONG       │──S17
│                   OBTAINED SOLUTIONS                              │
└─────────────────────────────────────────────────────────────────┘
```

FIG.15

EP 3 792 788 A1

```
┌─────────────────────────────────────────────────────────────────────┐
│                    INPUT ISING PROBLEM                                │──S11
└─────────────────────────────────────────────────────────────────────┘
                                  │
┌─────────────────────────────────────────────────────────────────────┐
│      SET INITIAL VALUES TO INPUT PARAMETERS AND STATE IN ACCORDANCE   │──S12
│                WITH SOLUTION SEARCH ALGORITHM                         │
└─────────────────────────────────────────────────────────────────────┘
                                  │
┌─────────────────────────────────────────────────────────────────────┐
│   PERFORM SEARCH FOR SOLUTIONS BY USE OF INITIAL VALUES OF INPUT      │──S13
│   PARAMETERS AND STATE, AND OBTAIN STATE HAVING SMALL OBJECTIVE       │
│              FUNCTION VALUE AS SOLUTION                               │
└─────────────────────────────────────────────────────────────────────┘
                                  │
              ◇ S14                                              YES
      NUMBER OF SEARCHES FOR SOLUTIONS ──────────────────────────────►
         EXCEED A SET COUNT LIMIT T?
                                  │ NO
┌─────────────────────────────────────────────────────────────────────┐
│  GENERATE STATE UNTIL STATE IS OBTAINED IN WHICH A OR MORE BITS ARE   │──S15
│  DIFFERENT FROM ANY OF N SOLUTIONS OBTAINED BY N PREVIOUS SEARCHES    │
│                     FOR SOLUTIONS                                    │
└─────────────────────────────────────────────────────────────────────┘
                                  │
         YES          ◇ S50
◄──────────     DISTANCE
          BETWEEN ANY INITIAL STATE PREVIOUSLY USED
   AND STATE OBTAINED BY SEARCH ACHIEVING SUBSTANTIALLY MONOTONOUS INCREASE
           OF OBJECTIVE FUNCTION VALUE IS LESS THAN
                      THRESHOLD D?
                                  │ NO
┌─────────────────────────────────────────────────────────────────────┐
│  OBTAIN LOCAL SOLUTION BY PERFORMING STATE TRANSITIONS FROM GENERATED │
│  STATE SERVING AS START POINT SUCH AS TO SATISFY CONSTRAINTS WITH     │──S16
│  CERTAINTY AND TO DECREASE OBJECTIVE FUNCTION VALUE WITH HIGHER       │
│  CERTAINTY THAN IN THE SEARCHES FOR SOLUTIONS, AND PROVIDE STATE OF   │
│              LOCAL SOLUTION AS INITIAL STATE                          │
└─────────────────────────────────────────────────────────────────────┘
                                  │
         YES          ◇ S60
◄──────────     DISTANCE
          BETWEEN ANY INITIAL STATE PREVIOUSLY
   USED AND STATE OBTAINED BY SEARCH ACHIEVING SUBSTANTIALLY MONOTONOUS
         INCREASE OF OBJECTIVE FUNCTION VALUE IS LESS
                  THAN THRESHOLD D?
                                  │ NO
┌─────────────────────────────────────────────────────────────────────┐
│     OUTPUT STATE HAVING SMALLEST OBJECTIVE FUNCTION VALUE             │──S17
│                  AMONG OBTAINED SOLUTIONS                             │
└─────────────────────────────────────────────────────────────────────┘
```

Europäisches
Patentamt

European
Patent Office

Office européen
des brevets

## EUROPEAN SEARCH REPORT

Application Number

EP 20 19 4191

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PURUSHOTHAMA G K ET AL: "Simulated Annealing With Local Search-A Hybrid Algorithm for Unit Commitment", IEEE TRANSACTIONS ON POWER SYSTEMS, IEEE SERVICE CENTER, PISCATAWAY, NJ, US, vol. 18, no. 1, February 2003 (2003-02), XP011079298, ISSN: 0885-8950 * pages 275 and 277 * | 1-11 | INV. G06F17/11 G06N5/00 G06Q10/04 |
| X | BOUHMALA NOUREDDINE ED - MELIÁN-BATISTA BELÉN ET AL: "Combining simulated annealing with local search heuristic for MAX-SAT", JOURNAL OF HEURISTICS, KLUWER ACADEMIC PUBLISHERS, DORDRECHT, NL, vol. 25, no. 1, 26 July 2018 (2018-07-26), pages 47-69, XP036683222, ISSN: 1381-1231, DOI: 10.1007/S10732-018-9386-9 [retrieved on 2018-07-26] * section 3 (pages 50-53) * | 1-11 | |
| A | SHUNTARO OKADA ET AL: "Improving solutions by embedding larger subproblems in a D-Wave quantum annealer", ARXIV.ORG, CORNELL UNIVERSITY LIBRARY, 201 OLIN LIBRARY CORNELL UNIVERSITY ITHACA, NY 14853, 2 January 2019 (2019-01-02), XP081011194, * the whole document * | 1-11 | TECHNICAL FIELDS SEARCHED (IPC) G06F G06N G06Q |

-/--

The present search report has been drawn up for all claims

| Place of search | Date of completion of the search | Examiner |
|---|---|---|
| Berlin | 1 February 2021 | Huguet Serra, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 20 19 4191

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MALIHEH ARAMON ET AL: "Physics-Inspired Optimization for Quadratic Unconstrained Problems Using a Digital Annealer", ARXIV.ORG, CORNELL UNIVERSITY LIBRARY, 201 OLIN LIBRARY CORNELL UNIVERSITY ITHACA, NY 14853, 22 June 2018 (2018-06-22), XP081200633, DOI: 10.3389/FPHY.2019.00048 * the whole document * | 1-11 | |
| A | US 2019/204794 A1 (MATSUBARA SATOSHI [JP] ET AL) 4 July 2019 (2019-07-04) * the whole document * | 1-11 | |

TECHNICAL FIELDS
SEARCHED      (IPC)

The present search report has been drawn up for all claims

| Place of search | Date of completion of the search | Examiner |
|---|---|---|
| Berlin | 1 February 2021 | Huguet Serra, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 19 4191

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2021

| Patent document cited in search report | | Publication date | Patent family member(s) | | Publication date |
|---|---|---|---|---|---|
| US 2019204794 | A1 | 04-07-2019 | JP | 2019121137 A | 22-07-2019 |
| | | | US | 2019204794 A1 | 04-07-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014178717 A
- JP 2009048353 A